# EUROPEAN PATENT APPLICATION

(11) **EP 2 952 360 A1**
(43) Date of publication of application: **09.12.2015**
(21) Application number: 13846241.1
(22) Date of filing: 01.02.2013
(51) Int. Cl.: B44C 1/18, B41M 3/06, G02B 27/22

(54) **PRINTING DECORATIVE FILM HAVING STEREO EFFECT AND DECORATIVE PLASTIC PRODUCT THEREOF**

(71) Applicant: Hwang, Yu-chen, Xinwu Township, Taoyuan County 327 (TW)
(72) Inventor: Hwang, Yu-chen, Xinwu Township, Taoyuan County 327 (TW)
(74) Representative: Schwerbrock, Florian
(86) International application number: PCT/CN2013/000109
(87) International publication number: WO 2014/117299

(57) **Abstract**

A 3D printed decorative film includes a transparent substrate with one-sided or two-sided concave or convex structures and a printing layer. The transparent substrate is a thermoplastic film. The heat softening temperature of concave or convex structures is at least 50 °C higher than that of thermoplastic film. An additional reflective layer was applied on top or bottom of printed layer. The reflective layer can be reflective powder, metalized film or high reflective index materials. The concave or convex structure lens is prism, half sphere, half cylindrical, pyramidal, Fresnel lens structures or the combination of above.

## Description

### RELATED APPLICATIONS

This application claims priority of Taiwan Patent Application No. 102102413, filed January 23, 2013, the entire disclosure of which is incorporated herein by reference.

### BACKGROUND

In-Mold Decorating (IMD) is a thermal forming method to create plastic goods with a layer of printed decorative film which was placed in a match mold and followed with resin injection. The method keeps the printed graphics between printing substrate and the thermoplastic resin and prevents the pattern from scratches. The method is commonly used for the decoration of cellphone housing and consumer electronic products.

In-Mold Decorating (IMD) is used to make surface decorated products, mainly for appliance housing, and functional panels. It is also used for cellphone viewing panels and housings, control panels or labels of washing machine, refrigerator, automotive and cookware.

IMD is the most efficient method to make products requiring backlight, color printing, curved surface, imitation of metal surfaces and brushed finish, or imitation of hickory material that cannot be achieved by traditional printing or paint spraying. IMD is achieved by printing on a transparent substrate, thermal forming, die cutting, and thermoplastic forming. It eliminates the time and human resource for post-processing. Traditional plastic formation can no longer satisfy the need of thin, light and small size in consumer electronic products, particularly with the environmental concerns. Therefore, IMD is adopted for 3C products, household appliances, LOGO tags, automobile parts and especially cell phone cases and dashboards of variety of products.

### BRIEF SUMMARY

In the teachings of this application, decorative graphics are printed on a transparent substrate having lens structures. Due to the underlying lens structures, the printed graphic layer duplicates the contours of the concave or convex structures that enable a visual depth perception to its observers. Such 3D printed film can be applied for the decoration of any product and creates a unique visual effect, on products such as cell phone cases, personal computer cases, notebook, keyboard, automobile industry, or any product that requires a decoration on its surface.

### BRIEF DESCRIPTION OF THE DRAWINGS

For a further understanding of the present teachings, reference will be made to the following detailed description of embodiments of the invention that are to be read in connection with the accompanying drawings, wherein:
FIG. 1 is a flow diagram of In-Mold Decorating manufacturing process.
FIG. 2 is a diagram to show the principle of visual perception.
FIG. 3a is an embodiment of a 3D printed decorative film applied on a plastic product, and its principle of the visual perception.
FIG. 3b is another embodiment of a 3D printed decorative film applied on a plastic product, and its principle of the visual perception.
FIG. 4 represents the cross-section views of a selection of the lenses (4 to 12) for 3D printed decoration films.
FIG. 5 represents the cross-section views of 3D printed decoration films made by various lens structures.
FIG. 6 is cross section view of a product made with 3D printed decoration film.

### Description of key elements

- 1:: transparent substrate
- 2:: printed layer
- 3:: match mold
- 4:: resin injection machine
- 5.: resin
- 6:: lens
- 7:: reflective layer
- 8:: half sphere lens film
- 9:: prism lens film
- 10:: parallel composite lens film
- 11:: perpendicular composite lens film
- 12:: half sphere and half cylindrical composite lens film
- G:: graphic area
- H:: blank arena
- R:: right eye
- L:: left eye

### DETAILED DESCRIPTION

IMD is the integrated process of printing, thermal forming and resin injection molding. Although there are slight variations in materials used in IMR (in-mold roller) /IML (in-mold labeling) /IMF (in-mold film), the principles are still the same. In general, IMD process includes three steps: printing, thermal forming and resin inject molding. Printing process is chosen from digital printing, screen printing, tempo printing or thermo printings to result in a decorative film. Thermal forming process pre-forms the decorative film into a desired shape by applying temperature and die pressing. Resin inject molding process is to fill the cavity inside of the match mold with polymer material.

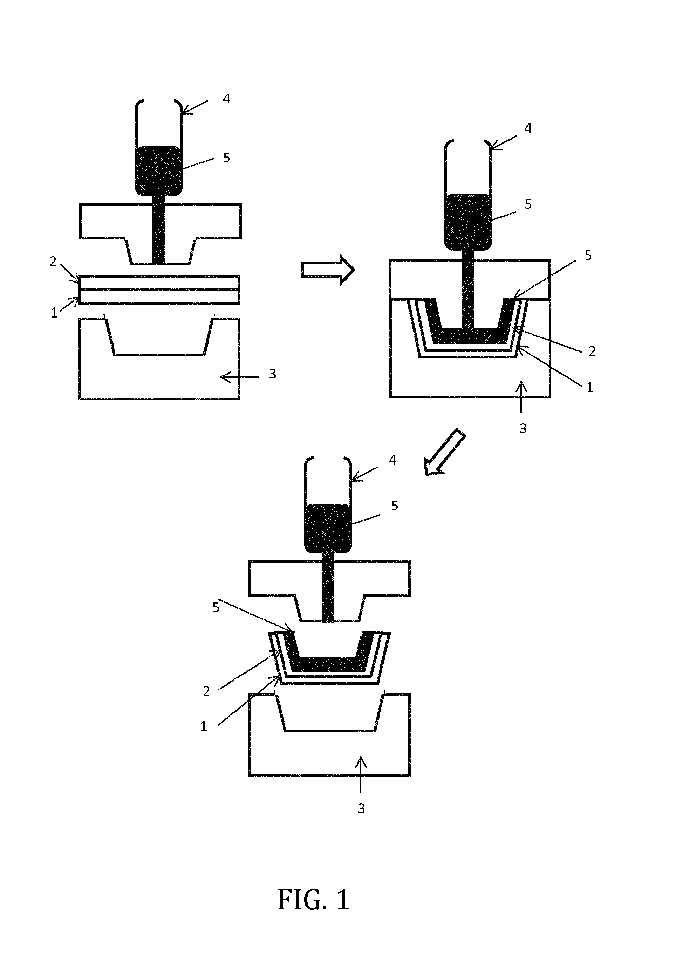

As illustrated in FIG. 1, a printing layer 2 was applied on the surface of the transparent substrate 1. Such printed transparent substrate 1 was positioned in the cavity of the match mold 3. Optionally, the printed transparent substrate 1 can be thermally pre-shaped. Resin 5 was injected into the cavity of the match mold 3 with a resin injection machine 4. The printed layer 2, transparent substrate 1, and the polymer material 5 are bonded together after the injection. Optionally, hard coating can be applied on the on the outer surface of the transparent substrate 1 to increase its hardness and anti-abrasion properties. The resulting film hardness can be higher than 3H depending on the material type of the transparent substrate 1. The polymer material 5 can be selected from Polycarbonate (PC), (Polymethylmethacrylate (PMMA), Polybutylene Terephthalate (PBT), Acrylonitrile-Butadiene-Styrene (ABS), Polystyrene, Methyl Methacrylate Styrene Copolymer MS, Polyethylene Terephthalate (PET), Polyoxymethylene (POM), Nylon or carbon fiber or glass fiber reinforced composite.

The need of realistic product with 3D forming may be achieved with two injection processes. In the case of applying embodiments of teachings of this invention with an uneven surface or structure, two times injection processes maybe needed. First injection creates the structure needed for the product, and then a second injection attaches to the product surface.

Product design trend favors three-dimensional shape. Therefore, the 3D decorative film needs to be pre-shape to the required three-dimensional shape before it is place inside the match mold for resin injection molding. The decoration film will cover the complete or a portion of the product surface.

The desire for better product appearance impacts the quality of decorative film. High printing resolution and high printing color saturation are required to satisfy such need. As the result, 3D visual effect is highly anticipated for future needs.

Graphics are printed on the transparent substrate 1 with 3D printing technology. The transparent substrate 1 contains one-sided or two-sided concave or convex structures. Such structures create a visual depth perception, because of the visual offset between human eyes. The effect is similar to stereoscopic moire, but without printing limitation and inaccuracy of chromatography printing.

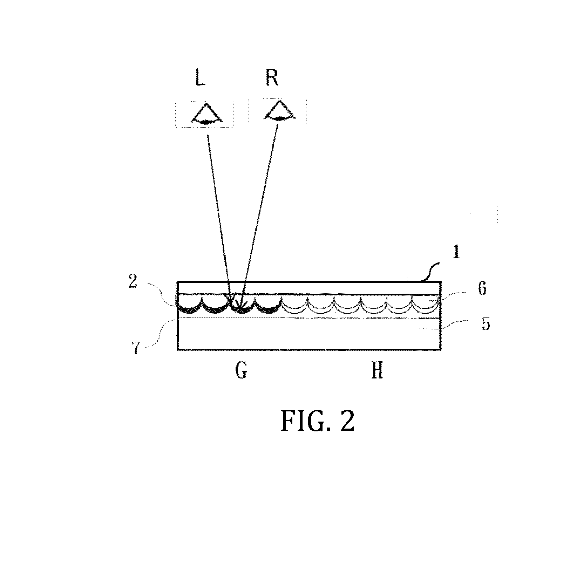

The transparent substrate 1 may have various one-sided or two-sided surface structures, which have concave or convex geometry. As an example in FIG. 2, the transparent substrate 1 has lens 6. Printing layer 2 was applied on the transparent substrate 1. The printing method may be screen printing, ink-jet printing, heat transfer printing, gravure printing, letter press printing or any printing method that is able to copy graphics onto the transparent substrate 1. The brightness contrast may be enhanced with a reflective layer 7. The reflective layer 7 is not a necessary, but is an auxiliary tool to increase the contract ratio of the graphic images. FIG. 2 indicates that the visual offset between right eye (R) and left eye (L) to create a visual depth perception to its observer. The degree of visual offset changes while observer moves, and the depth perception also changes accordingly that makes the graphics look vivid and attention catching.

The transparent substrate 1 can be a single layer or multiple layered material, selected from Acrylic, Polycarbonate, Polyurethane, Polyester, Cellulose tri-acetate or a combination from above.

Pre-shaping the decoration plate may be needed when making a product with curved or three-dimensional surface. Pre-shaping can be achieved by applying high temperature on the decoration plate. The heat softening temperature of concave or convex structures is at least 50 ° C higher than that of thermoplastic film; so the concave or convex structures 6 can remain its shape during the pre-shaping process.

Flexibility of decoration plate can also be achieved by changing the density of the concave or convex structures. A weak point or weak line can be generated on the transparent substrate 1 by creating a density difference of the concave or convex structures. Such weak point or weak line enables the material to bend or curve under pressure. The 3D printed decoration plates with weak lines can have printing patterns to mimic the appearance of metal, wood, clothes, stone lines, ceramics or chameleon materials.

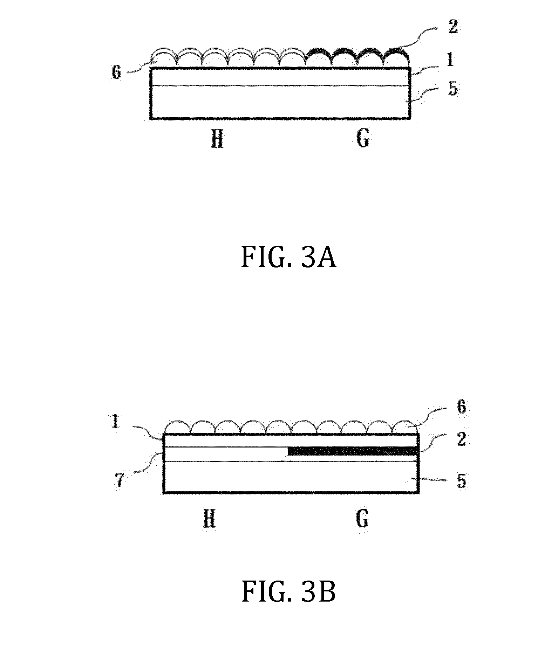

As illustrated in FIG. 3A, a 3D printed decorative film may have additional disposable protection film on printed layer 2 and then pre-shape to the opposite direction with the manufacturing process mentioned in previous paragraph, followed by putting the pre-shaped decorated film into the match mold 3. Such protective layer will be removed after resin injection process to provide a 3D printed decorative plastic object.

As illustrated in FIG. 3B, 3D printed decorative made with the manufacturing process mentioned in previous paragraph. However, the printed layer 2 was located at the side of transparent substrate 1 without concave and non-convex structures, the smooth surface. A reflective layer 7 or a disposable protective film can be applied on the printed layer 2 and results in different products.

This application reveals a 3D printed decorative film which includes a transparent substrate with one-sided or two-sided concave or convex structures and a printed layer. The transparent substrate is a thermoplastic film. The heat softening temperature of concave or convex structures is higher than that of thermoplastic film.

Furthermore, the printed layer shows 3D visual effect because it replicates the surface structure of the concave or convex lens 6. The uneven structure enhances the adhesion between printed ink and resin 5.

Preferably, the concave or convex lens 6 is made of thermosetting material to prevent distortion of the concave or convex geometry during processing.

Preferably, the concave or convex structure lens 6 is made of UV curable or electron beam curable resin. Spacing is recommended among lenses 1 to provide the flexibility and stretchability needed for pre-shaping transparent substrate 1.

Furthermore, the prior mentioned 3D printed decorative film is made of transparent substrate 1 with a one-sided or two-sided lens structures. Such structures are selected from prism, half sphere, half cylindrical, pyramidal, Fresnel lens structures or the combination of above. Transparent substrate 1 with double-sided lens structures will provide better 3D effect than that of 1-sided.

A digital printing method was used to produce desired visual stereoscopic effect. For the example of half sphere lens film 8, it is preferred to have a printing resolution of more than 400 dots per inch of the density of half sphere lens is greater than 5000 lens per square inch. Thus, the number of concave or convex structure is enough to produce the desired visual stereoscopic effect, and does not significantly impact the resolution of the printed image resulting in a 3D printed decorative film.

The smaller the size of half sphere lens results in the higher flexibility and stretchability, the less decrease in resolution, but the less in visual stereoscopic effect. For an industrial-grade digital inkjet printer with a resolution of >500 dots per inch (equivalent to a quarter million points per square inch) as an example, the density of half spherical lens is best to be between 25,000 and 200,000 lenses per square inch. In other words, the best relationship between printing resolution and lens density is greater than 1.25:1, preferably between 5:1 and 10:1. The selection criteria of lens specification shall be based on the performance of 3D effect and graphic resolution.

Preferably, it is desired to have a printing resolution 5 to 20 times the lens density to provide the best 3D printed decorative film.

Proper selection of lens structure can achieve a good combination of 3D effect at graphic area G and reflective effect at the blank area H, for example, half sphere lens film 8, prism lens film 9, half cylindrical, pyramidal and etc. Additional examples are from Composite lens films which have with lens structures on both sides of transparent substrate 1. They can be designed as parallel composite lens 10, perpendicular composite lens film 11, and a combination of prism and half cylindrical composite lens. The structure of composite lens films can be a combination of prism, half sphere, half cylindrical, pyramidal, Fresnel lens.

The half cylindrical lens structure is preferred for best stereoscopic visual effect. Therefore, the preferred structure of composite lens may be a combination of half cylindrical lens with the other side chosen from prism, half sphere, half cylindrical, pyramidal and Fresnel lens.

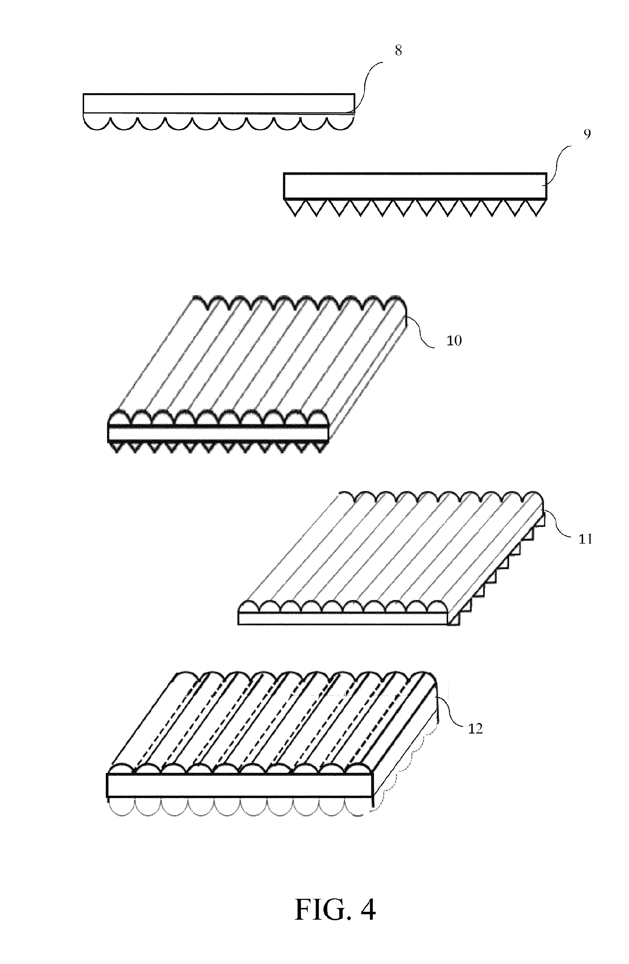

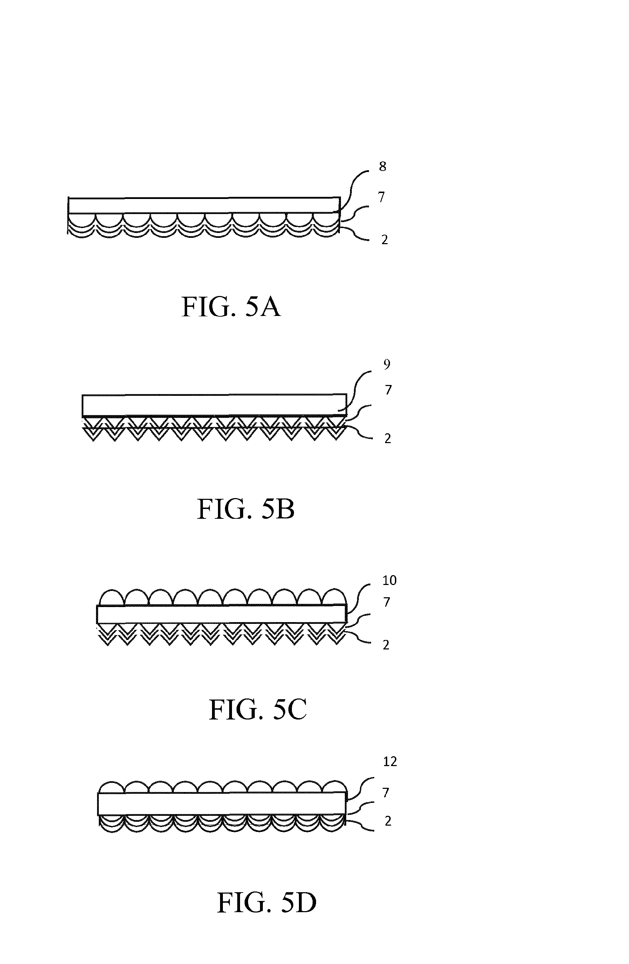

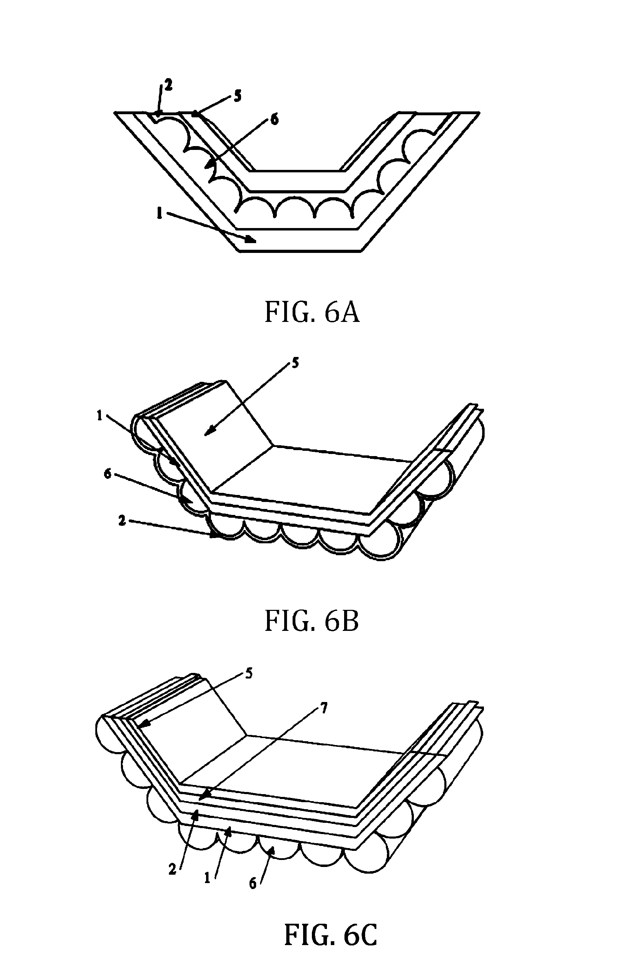

The 3D printed decorative films (5a)-(5b) as illustrated in FIG. 5 can be manufactured from elements 8-13 in the FIG 4 with a printed layer 2, and further comprising a reflective layer 7. For composite lens film, it is better to have the half cylindrical lens facing viewer side in the match mold 3 to obtain the best 3D effect, and then, followed with a resin injection process to provide the resulting 3D printed decorated plastic goods, as illustrated in FIG 6B.

The 3D printed decorative films can be manufactured with elements 8-13 in the FIG 4 with printed layer and further comprising a reflective layer 7. A disposable protective film was applied on the printed layer 2. With the disposable protection film facing the match mold 3 surface, resin 5 was injected into the match mold 3, as FIG. 3A. The protective film was then removed after the resin injection process to provide the resulting 3D printed decorated plastic goods illustrated in FIG 6B.

When the printed layer 2 was applied on the surface without lens structures, a reflective layer 7 was coated on the printed layer. As illustrated in FIG. 3B, a disposable protection film can be applied on the lens surfaces. By selecting different lens structures from element 8-13 seen in FIG. 4, different 3D decorative films can be generated as illustrated in FIG. 6C.

The lens 6 may be made of Acrylic, Polycarbonate, Polyurethane, Epoxy, Silicone, or Polyester material. Acrylic is the best in light guiding and light transmission effect. UV or electronic beam curable acrylic can be applied on both side of transparent substrate 1, and cured with embossing roller with lens patterns on the roller surfaces.

The contrast ratio of prior 3D printed decorative film can be further improved when combined with a reflective layer 7. Such reflective layer 7 can be made of reflective powder, metalized film or high reflective index materials. Aluminum foil can be used as metalized film. High refraction index materials can be a transparent resin with high retraction index additives chosen from TiO₂, ZrO₂ and HfO₂. The transparent resin can be chosen from acrylic, epoxy, polyurethane and silicones. The reflective layer 7 may be patterned with etching process.

The above described 3D printed decorative film has the following virtues.
1. Lens structures at one side or two sides of transparent substrate enhance the flexibility and processability of IMD process with the 3D printed decorative film.
2. Embodiments of this invention avoid the chromatography accuracy problem in color moire printing.
3. The concave or convex structure creates a visual depth without causing dizziness of the observer. Compared to the optical grating method, this application provides wider stereoscopic viewing angle, but weaker 3D effect.
4. The transparent substrate is a good light guidance material itself as well as the substrate for the concave or convex lens.
5. The lenses in this application have high light transparency and capable of delivering high resolution of imagines.
6. High transparency lenses and the blank area can effectively increase the overall light contract, especially with the integration of a reflective layer.

These teachings have given traditional IMD products additional functions and provides integration of graphic decoration with 3D eye-catching. Therefore, this invention, as claimed, has the requirements of novelty, non-obviousness and usefulness.

### Embodiments

Example embodiments of the present invention are described below by way of nine examples. However, the present invention should be in no way restricted by the examples provided.

In order to achieve comparable test results, same ink, printer, surface modifier and ink protecting material are used in all examples below. Of course, there are equivalent materials and equipment can achieve equivalent effect; therefore, the examples should not be used to limit the scope of the present invention.

Mitsubishi Diamond 10-color printer is used. Rubber clothes are from Reeves Brother Isotec and rubber cleaning system from Baldwin Impact. Graphite ink roller is Diamond brand Blue Max and UV-Oxy ink roller cleaning fluid. Ink-Systems DG931 washing fluid is used before switching to hybrid UV printing. Per gallon of water tank solution contains a mix of 3 units 2451U (Printer's Service Company) and 2 units of non-alkali alcohol alternative solution. Radiants UV light is used with power of 450 watts / sq.in. One set of UV source is installed on the seventh units and the tenth unit, and three sets of UV sources are installed on Glazing Block, and the UV energy is 30% higher than the average UV printing technology. Printing ink is mainly Hybrid UV-Ink Systems (Hybrid UV ink) from Dynagraf Company.

### Embodiment 1

The transparent substrate material is 120cm long and 80cm wide MLF EverRay® LM, a 188µm thick half spherical lens film made of ethylene terephthalate(PET), from Kolon company in Korea. It is a film with heat defection temperature is 120°C and contains one-side UV-cured half spherical lens with defection temperature is 180°C. The lens structures are 42µm in height and a lens density of 70,000 per square. Graphic images were printed with UV-curable inks with a resolution of 600 dots per inch (360,000dots per square inch). The resulting 3D printed decorative film has a printing resolution 5 times of the lens density, which provides a good stereo visual effect and image resolution.

### Embodiment 2

A transparent substrate made from a Cellulose triacetate film is 120cm long and 80cm wide with heat deflection temperature of 80°C. It contains UV-curable epoxy half spherical lenses in 20µm height with a heat deflection temperature of 250 °C. The epoxy resin is EPO-TEK® epoxy. The density of the half spherical lenses is 50,000 per square inch. It was printed with UV-curable Ink with a resolution of 800 dots per inch (640,000 dots per square inches). Such 3D printed decorative film has a printing resolution 13 times of its lens density. Such decorative film provides an excellent stereo effect and image resolution.

### Embodiment 3

An acrylic film, 120cm long and 80cm wide, has one-side half spherical lens structure in lens density of 70,000 per square inch gone through the same process of embodiment 1. The printed layer 2 has printing resolution of 1300 dots per inch (1,690,000 dots per square inch). Such 3D printed decorative film has a printing resolution 24 times of its lens density. The resulting decorative film has a fantastic stereo effect but the image resolution decreases dramatically.

### Embodiment 4

An acrylic film, 120cm long and 80cm wide, has one-side half spherical lens structure in lens density of 70,000 per square inch gone through the same process of embodiment 1. The printed layer 2 has printing resolution of 250 dots per inch (250, 000 dots per square inch). Such decorative film has a printing resolution 2.5 times of its lens density. Such decorative film has no stereoscopic effect.

### Embodiment 5

A half cylindrical lens film was attached to a prism lens film with pressure sensitive adhesive. Such prism lens film is a 0.6mm thick Vikuiti film from 3M Company of a density of 200 lenses per inch. It provides a perpendicular composite lens film 11. A decorative film can be achieved with a digital printed layer 2.

### Embodiment 6

A decorative film created from embodiment 1 was shaped with high pressure or vacuum. Such decorative film was placed in a match mold with non-printed surface against the mold surface. ABS resin was injected into the mold with a temperature of 240 °C, injection speed 300mm/sec-600mm/sec and 40% injection pressure to result in plastic products with 3D printed decorated surface.

### Embodiment 7

On the printed side of the decorative film created from embodiment 1, a reflective layer 7 was coated on the printed layer 2, as illustrated in FIG. 2. The main ingredient of the reflective layer is inorganic micro glass beads with high reflective index. Such inorganic micro glass beads are coated with aluminum to provide a very good light reflecting effect. Even without the aluminum layer the micro glass beads provide a good reflective effect. Following the method of embodiment 6, it results in a plastic product with 3D decorated surface.

### Embodiment 8

Using the decorative film created from embodiment 1, a disposable protection film was laminated on the printed layer 2. Such decorative film further goes through the process of embodiment 6, but having the non-printed side placed against the match mold surface, as FIG. 3a. Followed with injecting of ABS resin, a plastic product with 3D decorative surface can be obtained after removing the disposable protection film.

### Embodiment 9

A 3D printed decorated film was made with the process of embodiment 1 except with the printed layer located on the non-structure surface of the lens, the smooth surface. A reflective layer 7 can be coated on the printed layer as illustrated in FIG.3b, or a disposable protection film covers the lenses to generate different types of 3D printed decorative plastic goods.

Moreover, as those of skill in this art will appreciate, many modifications, substitutions and variations can be made in and to a method of making 3D printed decorative film of these example embodiments without departing from its spirit and scope. In light of this, the scope of the present invention should not be limited to that of the particular embodiments illustrated and described herein, as they are only exemplary in nature, but instead, should fully commensurate with that of the claims appended hereafter and their equivalents.

In the following claims, the term "lens" means either or both convex lenses and concave lenses.

## Claims

1. A 3D printed decorative film comprising a transparent substrate with a surface printed layer; wherein lens structures are located on the surface of at least one side of the of transparent substrate; and wherein the transparent substrate is a thermoplastic film and the heat softening temperature of the lens structures is at least 50 ° C higher than that of thermoplastic film.

2. The 3D printed decorative film according to claim 1 where the printing is directly on the lens structures.

3. The 3D printed decorative film according to claim 1, where the transparent substrate is made of at least a single layer and optionally of multiple layers.

4. The 3D printed decorative film according to claim 1, further comprising a reflective layer, the reflective layer comprising a reflective powder, a metalized film or optionally another high reflective index material.

5. The 3D printed decorative film according to claim 4 where the reflective layer comprises metalized film and the metalized film has patterns made by cutting or corrosion processing, and where the metalized film is comprised of at least one of: TiO_{2,}, ZrO₂, and HfO₂, and the 3D film is further comprised of a transparent polymer selected from Acrylic, Epoxy, Polyester, and Silicone.

6. The 3D printed decorative film according to claim 1, where the lens structures are made of thermoset material.

7. The 3D printed decorative film according to claim 6, where the lens structures are made of a UV Curable or of an electron beam curable material.

8. The 3D printed decorative film according to claim 1 where the lens structures comprise at least one of: prism, half sphere, half cylindrical, pyramidal and Fresnel.

9. The 3D printed decorative film according to claim 1 where the printed layer has a printing resolution of between about 5 to about 20 times the density of the lens structures.

10. The 3D printed decorative film according to claim 6 where the thermoset lens structures are made of a soft and flexible material.

11. A 3D printed decorative film according to claim 6, where the thermoset lens structures are made of material selected from Acrylic, Epoxy, Polyester, and Silicone.

12. The 3D printed decorative film according to claim 1 where the lens structures contain several cutting weak lines on the surface that can be used to mimic the appearance of at one of: metal, wood, cloth, stone, ceramics and chameleon materials.

13. The 3D printed decorative film according to claim 6 where the thermoset lens structures have non-uniform structural densities.

14. A 3D printed decorative plastic object comprising a 3D printed decorative film according to claim 1 produced through a resin injection process with its non-printed side placed against a mold surface and followed with injecting resin onto the printed layer and wherein the resins are selected from Polycarbonate (PC), (Polymethylmethacrylate (PMMA), Polybutylene Terephthalate (PBT), Acrylonitrile-Butadiene-Styrene (ABS), Polystyrene, Methyl Methacrylate Styrene Copolymer MS, Polyethylene Terephthalate (PET), Polyoxymethylene (POM), Nylon, and carbon fiber or glass fiber reinforced composite resin.

15. A 3D printed decorative plastic object comprising a 3D printed decorative film according to claim 1, with its printed layer placed against a mold surface and followed with injecting resin onto its non-printed side and wherein the resins are selected from Polycarbonate (PC), (Polymethylmethacrylate (PMMA), Polybutylene Terephthalate (PBT), Acrylonitrile-Butadiene-Styrene (ABS), Polystyrene, Methyl Methacrylate Styrene Copolymer MS, Polyethylene Terephthalate (PET), Polyoxymethylene (POM), Nylon, and carbon fiber or glass fiber reinforced composite resin.

16. The 3D printed decorative plastic object according to claim 14 where said 3D printed decorative film was thermally pre-shaped before the resin injection process.

17. A 3D printed decorative plastic object comprising a 3D printed decorative film according to claim 4, wherein the surface printed layer is located on the side of transparent substrate without lens structures, with its non-printed side placed against a mold surface and followed with injecting resin onto the printed layer and wherein the resins are selected from Polycarbonate (PC), (Polymethylmethacrylate (PMMA), Polybutylene Terephthalate (PBT), Acrylonitrile-Butadiene-Styrene (ABS), Polystyrene, Methyl Methacrylate Styrene Copolymer MS, Polyethylene Terephthalate (PET), Polyoxymethylene (POM), Nylon, and carbon fiber or glass fiber reinforced composite resin.

18. The 3D printed decorative film according to claim 1 where at least a portion of the lenses are convex.

19. The 3D printed decorative film according to claim 1 where at least a portion of the lenses are concave.
